# EUROPÄISCHE PATENTSCHRIFT

(11) **EP 0 656 081 B1**
(45) Veröffentlichungstag und Bekanntmachung des Hinweises auf die Patenterteilung: **18.12.1996**
(21) Anmeldenummer: 93919061.7
(22) Anmeldetag: 16.08.1993
(51) Int. Cl.: D06F 35/00, G01N 31/22

(54) **WASCHVERFAHREN**
WASHING PROCESS
PROCEDE DE LAVAGE

(30) Priorität: 24.08.1992 DE 4228021
(43) Veröffentlichungstag der Anmeldung: 07.06.1995
(73) Patentinhaber: Henkel Kommanditgesellschaft auf Aktien, 40191 Düsseldorf (DE)
(72) Erfinder: KUHLMANN, Werner, D-40789 Monheim (DE); KLING, Hans-Willi, D-42277 Wuppertal (DE)
(86) Internationale Anmeldenummer: EP9302170
(87) Internationale Veröffentlichungsnummer: WO9404741

(56) Entgegenhaltungen:
- WO-A-92/09568
- DE-A- 2 543 352
- DE-A- 2 949 254

## Beschreibung

Die vorliegende Erfindung betrifft ein Waschverfahren, bei dem die Konzentration der Waschlauge analytisch bestimmt wird.

Beim maschinellen Waschen von Textilien besteht vor allem im gewerblichen Bereich der Wunsch, die Dosierung des Waschmittels bei der Herstellung oder Regenerierung der Waschlauge teilweise oder vollständig automatisch ablaufen zu lassen. Für eine bedarfsgerechte Steuerung dieser Dosierung hat es sich als zweckmäßig erwiesen, nicht nur externe Vorgaben, sondern auch die tatsächliche Konzentration an Waschaktivsubstanz in der Lauge als Richtgröße für die weitere Dosierung heranzuziehen. Die notwendige Dosierung ergibt sich dann aus der Differenz zwischen Soll und Ist-Wert der Konzentration an Waschaktivsubstanz. Man verwendet derartige Steuerungsprozesse heute in erster Linie in kontinuierlich arbeitenden Waschstraßen, wobei man zur Bestimmung des Gehaltes an Waschaktivsubstanz in der Flotte die Tatsache ausnützt, daß mit steigender Konzentration die Gesamtleitfähigkeit der Flotte ansteigt. Der Zusammenhang zwischen Leitfähigkeit und Konzentration an Waschaktivsubstanzen muß für jede neue Zusammensetzung eines Waschmittels empirisch festgestellt werden. Schwierigkeiten ergeben sich bei diesem System aus dem sehr stark schwankenden Eintrag von Elektrolyten mit der verschmutzten Wäsche, der zu falschen Analysenergebnissen und damit auch zu fehlerhaften Dosierungen führt. Weiterhin ist aus der Deutschen Offenlegungsschrift 29 49 254 ein Verfahren bekannt, bei dem die Konzentration von Wasch- und Reinigungsflotten photometrisch über den Gehalt an fluoreszierenden Farbstoffen bestimmt wird. Nachteilig an diesem Verfahren ist die Tendenz aller Farbstoffe, sich aus Lösung an Textilfasern zu adsorbieren, so daß die Waschlauge an diesen Farbstoffen schneller als an den übrigen Wirkstoffen verarmt. Da die Adsorption zudem auch von der Qualität des Fasermaterials abhängt, ist auf diesem Wege eine verläßliche Konzentrationsbestimmung von Waschaktivsubstanzen nicht möglich. Für eine zuverlässigere Dosierung des Waschmittels wird deshalb seit längerem nach einem Verfahren gesucht, daß unabhängig von derartigen Störeinflüssen ist.

Ein derartig verbessertes Verfahren wurde jetzt gefunden.

Gegenstand der Erfindung ist ein Waschverfahren unter Verwendung einer wäßrigen Lösung von Waschaktivsubstanz, bei dem die Konzentration an Waschaktivsubstanz in der Lösung ermittelt wird, dadurch gekennzeichnet, dass die Ermittlung indirekt dadurch erfolgt, daß der Gehalt an einem reduzierenden Zucker bestimmt wird, der bei der Zubereitung der Waschlauge in einer Menge zugesetzt wird, die der Menge an Waschaktivsubstanz proportional ist. Vorzugsweise ist dabei der Zucker in einem bestimmten konstanten Verhältnis der Waschaktivsubstanz oder dem Gemisch mehrerer Waschaktivsubstanzen, auch als Waschmittel bezeichnet, vor der Zubereitung der eigentlichen Waschlauge zugemischt worden.

Als Waschaktivsubstanzen im Sinne der vorliegenden Anmeldung gelten in erster Linie Tenside und Buildersubstanzen, daneben aber auch beispielsweise Vergrauungsinhibitoren, Bleichmittel, Enzyme, Waschkraftverstärker und antimikrobielle Wirkstoffe.

Als reduzierender Zucker wird vorzugsweise Glucose eingesetzt.

Die Verwendung der reduzierenden Zucker als Tracersubstanzen löst nicht nur die Probleme der bisher bekannten Konzentrationsbestimmungsverfahren, weil diese Verbindungen weder in nennenswerten Mengen in die Waschlauge eingeschleppt werden noch auf Textilfasern aufziehen, sondern bietet auch unerwartete Vorteile bei der Analyse selbst. So hat sich herausgestellt, daß diese Verbindungen praktisch ungestört von den übrigen Waschmittelinhaltsstoffen in der Lösung bestimmt werden können und diese Bestimmung auch so schnell durchführbar ist, daß ihr Ergebnis zur Steuerung laufender Prozesse verwendet werden kann. Darüberhinaus sind Zucker biologisch abbaubar und toxikologisch unbedenklich und sie stören den Waschvorgang nicht.

Die Menge an Zucker, die der Waschflotte zugesetzt werden muß, hängt in erster Linie von der Empfindlichkeit ab, mit der die verwendete Verbindung analytisch unter diesen Bedingungen sicher bestimmt werden kann. Selbstverständlich hängt die zu wählende Menge auch in starken Maße vom Analysenverfahren ab. Bei den erfindungsgemäß verwendeten reduzierenden Zuckern liegen die Einsatzkonzentrationen üblicherweise zwischen etwa 0,02 bis 2 g/l Waschlauge, vorzugsweise zwischen etwa 0,1 und etwa 1 g/l Waschlauge. Werden die reduzierenden Zucker in das Waschmittel, aus dem die Waschlauge hergestellt wird, direkt eingearbeitet, so enthalten diese Waschmittel neben mindestens einem Tensid und mindestens einer Buildersubstanz etwa 1 bis 20 Gew.-%, vorzugsweise 3 bis 10 Gew.-% an reduzierendem Zucker. Wird die Waschlauge nicht aus einem Waschmittel, das alle für die Wäsche notwendigen Komponenten enthält, hergestellt, sondern erfolgt die Zubereitung der Lauge durch Zugabe einzelner Wirkstoffe oder Wirkstoffkombinationen, denen der reduzierende Zucker vorher zugesetzt wird, so enthalten diese entsprechend mehr an reduzierendem Zucker.

Die analytische Methode, mit deren Hilfe der Gehalt an Zucker in der Waschlauge bestimmt wird, kann in nahezu beliebigen Grenzen frei gewählt und den Bedingungen des Waschverfahrens angepaßt werden. Bevorzugt werden empfindliche Bestimmungsverfahren, die es erlauben mit geringen Zuckergehalten auszukommen, und solche Verfahren, die eine schnelle Bestimmung möglichst in kontinuierlicher Weise ermöglichen. Besonders bevorzugt wird deshalb die photometrische Bestimmung des Zuckergehaltes nach einer vorgeschalteten farbbildenden Reaktion zwischen dem Tracer und einem zugesetzten Reagenz. Die farbgebende Reaktion kann dabei jeweils an einzelnen Proben der zu analysierenden Waschlauge durchgeführt werden und führt dann nach Photometrie zu entsprechenden Einzelergebnissen. Für die kontinuierliche Konzentrationsüberwachung bietet sich aber auch die Möglichkeit, die Reaktion zwischen Tracer und Reagenz kontinuierlich in einem aus der Waschlauge abgezweigten Strom durchzuführen, wobei sich das Verfahren der Fließinjektionsanalyse besonders bewährt hat. Bei dieser Methode wird dem abgezweigten Strom der zu analysierenden Lösung, gegebenenfalls nach geeigneter Vorbehandlung, wie Filtration oder Temperierung, ein äquivalenter Strom eines oder mehrerer Reagenzien zudosiert, der gemeinsame Strom dann nach entsprechender Mischung nötigenfalls kontinuierlich weiteren Maßnahmen, wie zum Beispiel Erwärmung, ausgesetzt, bis sich die gewünschte Farbreaktion vollzogen hat und die Lösung einer photometrischen Meßzelle zugeführt werden kann. Typische Flüsse für die Lösungen bewegen sich im Bereich von 0,1 bis 2,5 ml pro Minute. Als Ergebnis wird hier mit einer gewissen Verzögerung ständig ein Meßwert für die gerade vorhandene Tracerkonzentration angezeigt, der es erlaubt, die Konzentration der Lauge kontinuierlich zu verfolgen. Anstelle der vollkontinuierlichen Arbeitsweise kann mit ähnlich gutem Erfolg die periodisch wiederkehrende Bestimmung von Einzelproben mit Hilfe der Fließinjektionsanalyse treten, die ebenfalls vollautomatisch durchgeführt werden kann.

Für die erfindungsgemäß als Tracersubstanzen verwendeten reduzierenden Zucker, insbesondere für Glucose, haben sich aromatische Hydrazinverbindungen, beispielsweise 4-Aminobenzhydrazid, als geeignete farbgebende Reagentien erwiesen. Diese aromatischen Hydrazinverbindungen bilden mit den reduzierenden Zuckern, insbesondere Glucose, intensiv gelb gefärbte Hydrazone, die photometrisch leicht erfaßbar sind. Diese Reaktion ist zum analytischen Nachweis von Zuckern aus der Literatur bekannt, so daß hier auf eine ausführlichere Darstellung der Reaktionsbedingungen verzichtet werden kann. Bemerkenswert ist, daß diese farbgebende Reaktion der Zucker weitestgehend unabhängig von sonstigen Bestandteilen der Waschmittel abläuft.

Das erfindungsgemäße Verfahren kann mit Vorteil überall dort eingesetzt werden, wo nachträglich der Gehalt einer Waschlauge an Aktivsubstanz ermittelt werden muß. Dies ist vor allem im gewerblichen Bereich der Wäscherei der Fall, wo häufig ein und dieselbe Waschlauge für mehrere Waschprozesse verwendet wird und in deren Verlauf durch verschiedene Einflüsse, beispielsweise durch Eintrag von verdünnteren Laugen oder Wasser oder durch Austrag der konzentrierten Lauge mit der Wäsche an Waschaktivsubstanz in unkontrollierter Weise verarmen kann. Um die Waschlauge wieder auf die Sollkonzentration zu bringen, kann zunächst der aktuelle Gehalt an Aktivsubstanz mit Hilfe der erfindungsgemäßen Methode ermittelt und dann entsprechend dem Ergebnis Waschmittel nachdosiert werden. Da sich das erfindungsgemäße Verfahren weitgehend bis vollständig automatisch durchführen läßt, eignet es sich im besonderen Maße für die mehr oder weniger automatische Steuerung dieser Waschmitteldosierung, die bei der Herstellung oder Regenerierung von Waschlaugen im gewerblichen Wäschereibetrieb heute angestrebt wird.

### Beispiel

In einer 13 Kammer-Taktwaschanlage, die kontinuierlich im Gegenstromverfahren arbeitete, wurde Krankenhauswäsche unter folgenden Bedingungen gewaschen:

| | |
|---|---|
| Durchlaufzeit: | 30 Minuten |
| Taktzeit: | 138 Sekunden |
| Beladung: | 35 kg pro Kammer |
| Flottenverhältnis: | 1:5 |
| Waschmittelkonzentration (Soll) | |
| - in Kammer 1: | 2,8 g/l |
| - in Kammer 5: | 1,4 g/l |

Das verwendete pulverförmige Waschmittel enthielt als Buildersubstanzen Silikat und Soda und als Tenside Alkylbenzolsulfonat, Fettalkoholethoxylat und Seife sowie 5,00 Gew.-% Glucose als Tracersubstanz. Die Waschmittelkonzentration in der Flotte wurde in Kammer 1 und in Kammer 5 über eine Bypass-Steuerung und die erfindungsgemäße Analysenmethode erfaßt und durch einen Vergleich der einprogrammierten Soll-Werte mit den gefundenen Ist-Werten mittels eines Mikroprozessors gesteuert.

In einem anderen Fall wurde nur an Kammer 5 die automatische Steuerung der Waschmitteldosierung vorgenommen und an Kammer 1 eine konventionelle Zeit-Mengen-abhängige Dosierung verwendet.

Die zur Analyse verwendete Apparatur war aus Standardbausteinen zusammengesetzt worden, die mit Hilfe von Teflonschläuchen (Innendurchmesser 0,5 mm) verbunden worden waren. Folgende Lösungen kamen zur Anwendung:
- Lösung 1:: 2,5 g 4-Aminobenzhydrazid und 12 g NaOH in 150 ml Wasser
- Lösung 2:: Käufliche Pufferlösung pH 4,62 (Acetat-Puffer) mit dem gleichen Volumen Wasser verdünnt

Beide Lösungen wurden über Pumpen mit 1 ml/Minute getrennt eingespeist und über ein T-Stück einer Mischstrecke zugeführt. Vor der Zusammenführung der beiden Lösungen wurden der Lösung 1 mit Hilfe eines Dosierventils und einer Dosierschleife Proben der Waschflotte (jeweils 20 µl) in segmentierter Form zugeführt. Nach dem Vermischen beider Lösungen wurde der Flüssigkeitsstrom in einer Temperierstrecke auf 70 °C aufgeheizt. Nach Durchlaufen einer Kühlstrecke (20 °C) wurde kontinuierlich die Extinktion der Flüssigkeit bei 410 Nanometer bestimmt. Die Maximalwerte der Extinktion wurden als Maß für die Glucosekonzentration angesehen und als solche kontinuierlich von einem angeschlossenen Rechner verarbeitet. Die Kalibration erfolgte mit Hilfe von wäßrigen Glucoselösungen im Konzentrationsbereich zwischen 0,02 und 0,3 g Glucose pro Liter, die mehrmals täglich anstelle der Waschlauge in den Analysenkreislauf eingespeist wurden. Die Korrektur der Empfindlichkeit erfolgte durch den Rechner automatisch. Eine Korrektur zur Eliminierung der Eigenextinktion der glucosefreien Waschlauge war im vorliegenden Falle nicht notwendig. Die vom Rechner ermittelten Analysenwerte wurden von einem Mikroprozessor mit den dort einprogrammierten Sollwerten verglichen, der seinerseits die Dosierventile der einzelnen Kammern ansteuerte und gegebenenfalls eine Nachdosierung des Waschmittels in entsprechender Menge veranlaßte.

## Patentansprüche

1. Waschverfahren unter Verwendung einer wäßrigen Lösung von Waschaktivsubstanz, bei dem die Konzentration an Waschaktivsubstanz in der Lösung ermittelt wird, dadurch gekennzeichnet, dass die Ermittlung indirekt dadurch erfolgt, das der Gehalt an einem reduzierenden Zucker bestimmt wird, der bei der Zubereitung der Waschlauge in einer Menge zugesetzt wird, die der Menge an Waschaktivsubstanz proportional ist.

2. Verfahren nach Anspruch 1, bei dem der Zucker in einer bestimmten Menge in dem zur Zubereitung der Waschlauge verwendeten Waschmittel enthalten ist.

3. Verfahren nach Anspruch 1, bei dem die Bestimmung des Zukkergehaltes nach einer farbbildenden Reaktion zwischen dem Zucker und einem der Analysenlösung zugesetzten Reagenz auf photometrischem Wege vorgenommen wird.

4. Verfahren nach Anspruch 3, bei dem die Bestimmung des Zuckergehaltes kontinuierlich in einem aus der Waschlauge abgezweigten Strom mit Hilfe der Fließinjektionsanalyse vorgenommen wird.

5. Verfahren nach Anspruch 4, bei dem als farbbildendes Reagenz ein aromatisches Hydrazinderivat verwendet wird.

6. Verfahren nach Anspruch 5, bei dem als Reagenz 4-Aminobenzhydrazid eingesetzt wird.

7. Waschverfahren nach einem der Ansprüche 1 bis 6, bei dem das Ergebnis der Gehaltsbestimmung in einem teil- oder vollautomatisierten Prozeß zur Steuerung der Waschmitteldosierung bei der Herstellung oder Regenerierung der Waschlauge verwendet wird.

8. Verwendung von reduzierendem Zucker in Waschmittel als Tracersubstanz für die Ermittlung der Waschmittelkonzentration in einer aus diesem Waschmittel hergestelltem Lauge.

## Claims

1. A washing process using an aqueous solution of washing-active substance, in which the concentration of washing-active substance in the solution is determined, characterized in that the determination is carried out indirectly by determining the content of a reducing sugar which is added during preparation of the wash liquor in a quantity proportional to the quantity of washing-active substance.

2. A process as claimed in claim 1, in which the sugar is present in a certain quantity in the detergent used to prepare the wash liquor.

3. A process as claimed in claim 1, in which the sugar content is photometrically determined after a colour-forming reaction between the sugar and a reagent added to the analysis solution.

4. A process as claimed in claim 3, in which the sugar content is continuously determined by flow injection analysis in a stream branched off from the wash liquor.

5. A process as claimed in claim 4, in which an aromatic hydrazine derivative is used as the colour-forming reagent.

6. A process as claimed in claim 5, in which 4-aminobenzhydrazide is used as the reagent.

7. A washing process as claimed in any of claims 1 to 6, in which the result of the content determination is used in a partly or fully automated process for controlling detergent dosage in the preparation or regeneration of the wash liquor.

8. The use of reducing sugar in detergents as a tracer substance for determining the concentration of detergent in a liquor prepared from the detergent.

## Revendications

1. Procédé de lavage avec utilisation d'une solution aqueuse de substance active de lavage, dans lequel la concentration en substance active de lavage dans la solution est déterminée,
caractérisé en ce que
la détermination a lieu de manière indirecte, du fait que la teneur est déterminée sur un sucre réducteur, qui est ajouté lors de la préparation de la lessive en une quantité qui est proportionnelle à la substance active de lavage.

2. Procédé selon la revendication 1,
dans lequel
le sucre est contenu en une quantité déterminée dans l'agent de lavage utilisé pour la préparation de la lessive.

3. Procédé selon la revendication 1,
dans lequel
la détermination de la teneur en sucre est entreprise par voie photométrique selon une réaction chromogène entre le sucre et un réactif ajouté à la solution d'analyse.

4. Procédé selon la revendication 3,
dans lequel
la détermination de la teneur en sucre est faite dans un courant dérivé de la lessive à l'aide de l'analyse à injection continue.

5. Procédé selon la revendication 4,
dans lequel
comme réactif chromogène, on utilise un dérivé d'hydrazine aromatique.

6. Procédé selon la revendication 5,
dans lequel
comme réactif on met en oeuvre du 4-aminobenzhydrazide.

7. Procédé de lavage selon une des revendications 1 à 6,
dans lequel
le résultat de la détermination de la teneur est utilisé dans un processus partiellement ou totalement automatisé pour le réglage de l'addition dosée d'agent de lavage lors de la préparation ou régénération de la lessive.

8. Utilisation de sucre réducteur dans un agent de lavage comme substance indicatrice pour la détermination de la concentration en agent de lavage dans une lessive préparée à partir de cet agent de lavage.
